# EUROPÄISCHE PATENTSCHRIFT

(11) **EP 2 551 713 B1**
(45) Veröffentlichungstag und Bekanntmachung des Hinweises auf die Patenterteilung: **14.09.2016**
(21) Anmeldenummer: 12175143.2
(22) Anmeldetag: 05.07.2012
(51) Int. Cl.: G02B 21/08, G02B 21/16, G02B 5/22

(54) **Mikroskopbeleuchtungsverfahren und Mikroskop**
Microscope lighting process and microscope
Procédé d'éclairage de microscope et microscope

(30) Priorität: 27.07.2011 DE 102011079941
(43) Veröffentlichungstag der Anmeldung: 30.01.2013
(73) Patentinhaber: Leica Microsystems CMS GmbH, 35578 Wetzlar (DE)
(72) Erfinder: Ganser, Michael, 35398 Gießen (DE); Weiß, Albrecht, 35440 Linden (DE)
(74) Vertreter: m patent group

(56) Entgegenhaltungen:
- DE-A1-102007 022 666
- US-A1- 2004 119 086
- US-A1- 2009 212 242

## Beschreibung

Die vorliegende Erfindung betrifft ein Mikroskopbeleuchtungsverfahren sowie ein Mikroskop zur Untersuchung eine Probe mit abwechselnd oder gleichzeitig zugeschalteter Durchlicht-Hellfeldbeleuchtung und Auflicht-Fluoreszenzbeleuchtung.

### Stand der Technik

In der Zytodiagnostik und in der Pathologie werden eingefärbte Proben mit einem Mikroskop meist in Durchlicht-Hellfeldbeleuchtung untersucht. Für die Diagnose ist die Farbe der mikroskopisch untersuchten Probe ein wichtiges Kriterium. Bei anderen mikroskopischen Untersuchungen beispielsweise mit Kontrastierverfahren, wie Phasenkontrast oder Differentieller Interferenzkontrast (DIC), ist die Farbe der Probe weniger von Bedeutung. Mit solchen Kontrastierverfahren werden ungefärbte Proben untersucht, die sich in der Durchlicht-Hellfeldmikroskopie als überwiegend transparent darstellen. Die Kontrastierverfahren dienen dann dazu, Phaseneigenschaften der Probe sichtbar zu machen.

Eine weitere bekannte Untersuchungsmethode stellt die Fluoreszenzmikroskopie dar. Hier wird mittels eines Auflichtbeleuchtungsstrahlengangs, der einen sogenannten Anregungsfilter durchquert, die zu untersuchende Probe beleuchtet. Das Anregungslicht führt zu Fluoreszenzen in dem mit Fluorochromen eingefärbten Objekt, wobei das abgestrahlte Fluoreszenzlicht das entstehende Mikroskopbild der Probe bestimmt. Die genannten Mikroskopieverfahren sind an sich seit längerem bekannt. Zu weiteren Details wird auf den vorhandenen Stand der Technik verwiesen.

Als Beleuchtungsmittel im Mikroskop, etwa für die Durchlicht-Hellfeldbeleuchtung, wurden in den letzten Jahrzehnten Halogenlampen eingesetzt. Das von der Halogenlampe abgegebene Licht entspricht überwiegend dem kontinuierlichen Spektrum eines schwarzen Strahlers (Planckscher Strahler). Meist wird in ein Lampenhaus mit Halogenlampe noch ein Wärmeschutzfilter eingebaut, das den Infrarotbereich der emittierten Strahlung stark abschwächt. Als Wärmeschutzfilter wird häufig ein Absorptionsglas (KG1 mit Dicke 2 mm) eingesetzt. Das kontinuierliche Spektrum der sich ergebenden Beleuchtung erlaubt eine sichere Farbbeurteilung durch den Benutzer.

Für die Beurteilung von Farben bei Beleuchtung mit einer bestimmten Lichtquelle ist der sogenannte Farbwiedergabeindex (engl. Colour Rendering Index, CRI) von Bedeutung. Hierunter versteht man eine fotometrische Größe, mit der sich die Qualität der Farbwiedergabe von Lichtquellen gleicher korrelierter Farbtemperatur beschreiben lässt. Als Referenz zur Beurteilung der Wiedergabequalität dient bis zu einer Farbtemperatur von 5.000 K das Licht, das von einem schwarzen Strahler der entsprechenden Farbtemperatur abgegeben wird. Über eine Farbtemperatur von 5.000 K hinaus wird eine tageslichtähnliche Spektralverteilung als Referenz herangezogen. Beispielsweise wird für die Berechnung der Farbwiedergabe einer Haushaltsglühlampe, die selbst in guter Näherung ein Planckscher Strahler ist, das Spektrum eines schwarzen Strahlers mit einer Temperatur von 2.700 K verwendet. Jede Lichtquelle, die das Spektrum eines schwarzen Strahlers gleicher (korrelierter) Farbtemperatur im Bereich der sichtbaren Wellenlängen perfekt nachbildet, erreicht einen Farbwiedergabeindex von 100. Halogenlampen können ähnlich wie Glühlampen Farbwiedergabeindizes von bis zu 100 erreichen.

In der Mikroskopie wird die Halogenlampe mehr und mehr durch Leuchtdioden (im Folgenden LEDs) mit ihren bekannten Vorteilen ersetzt. Diese Vorteile umfassen eine höhere Lichtabstrahlung bei geringerem Verbrauch elektrischer Leistung sowie eine längere Lebensdauer. Für die Durchlichtbeleuchtung werden überwiegend weiße LEDs eingesetzt. Bei einer weißen Standard-LED wird eine blaue, violette oder eine UV-LED mit fotolumineszierendem Material kombiniert. Meist gelangt eine blaue LED zum Einsatz, die mit einem gelben Leuchtstoff kombiniert wird. Auch UV-LEDs mit mehreren verschiedenen Leuchtstoffen (meist rot, grün und blau) können Verwendung finden. Nach den Prinzipien der additiven Farbmischung wird mit solchen LEDs weißes Licht erzeugt. Die so gefertigten Bauteile verfügen über gute Farbwiedergabeeigenschaften, wobei die Farbwiedergabeindizes zwischen 70 und 90 liegen. Allerdings geben die weißen LEDs kein kontinuierliches Spektrum ab. Die auf blauen LEDs basierenden Weißlicht-LEDs haben eine starke Emission im blauen Spektralbereich (bei ca. 450 nm), ein Minimum im blaugrünen (bei etwa 500 nm) und einen breiteren Emissionsbereich zu höheren Wellenlängen mit einem Maximum beim etwa 550 nm, der bei etwa 650 nm stark abfällt.

Das Verhältnis von Intensitätsminimum bei 500 nm zum Intensitätsmaximum bei etwa 450 nm liegt je nach LED-Typ bei ca. 10-20%. Mit einem solchen nicht-kontinuierlichen Spektrum als Probenbeleuchtung ist die Farbbeurteilung schwieriger und weicht von den Erfahrungswerten, wie sie bei der Mikroskopbeleuchtung mit einer Halogenlampe gewonnen wurden, ab.

Die DE 10 2007 022 666 A1 spricht dieses Problem an. Dort wird die Beleuchtung für die Mikroskopie von einer herkömmlichen Halogenlichtquelle, die mit einem Tageslichtfilter kombiniert ist, verglichen mit derjenigen einer Weißlicht-LED. Es wird festgestellt, dass sich aufgrund der unterschiedlichen Spektralverteilungen die Farben des Beobachtungsobjektes, das entweder visuell oder über eine (CCD-) Kamera beobachtet wird, ändern, wobei diese Farbänderung zu fehlerhaften diagnostischen Ergebnissen führen kann. Daher wird in dieser Schrift angestrebt, mittels eines sogenannten "Wellenlängenverteilungswandlerelements" die Spektralverteilung einer Weißlicht-LED an die Spektralverteilung von Tageslicht anzupassen. In dieser Schrift sind mehrere Beispiele für geeignete spektrale Transmissionsverläufe von möglichen Anpassungsfiltern ("Wellenlängenverteilungswandlerelementen") angegeben, wobei die Möglichkeit besteht, zwei Anpassungsfilter hintereinander zu schalten. Ein erstes Beispiel dort verwendeter Weißlicht-LEDs zeigt ein erstes Maximum im blauen Bereich (bei ca. 450 nm) und ein zweites, hier höheres Maximum im grüngelben Bereich (bei ca. 550 nm). Ein anderes Beispiel einer Weißlicht-LED zeigt hingegen den in der Beschreibungseinleitung weiter oben geschilderten spektralen Verlauf, bei dem das erste Maximum eine höhere Intensität als das zweite Maximum besitzt. In beiden Fällen wird durch das jeweilige Anpassungsfilter ein spektraler Verlauf erzielt, der insgesamt noch dem Verlauf der ursprünglichen Weißlicht-LED entspricht, wobei jedoch beide Maxima etwa auf gleiche Intensität eingestellt sind. Der resultierende spektrale Verlauf liegt also noch weit von dem gewünschten Ziel eines Spektrums von Tageslicht oder einer Halogenlampe (mit Tageslichtfilter) entfernt.

Ein weiteres Problem ergibt sich bei der bereits einleitend angesprochenen Fluoreszenzmikroskopie. Wenn das Mikroskop außer der bereits behandelten Durchlicht-Hellfeldbeleuchtung zusätzlich die Möglichkeit einer Auflicht-Fluoreszenzbeleuchtung aufweist, wurde von den Erfindern folgender Effekt festgestellt: Ein großer Teil des bei Auflicht-Fluoreszenz-Anregung der Probe erzeugen Anregungslichtes geht durch die Probe hindurch und gelangt über die Durchlichtbeleuchtungsachse bis zur Durchlichtbeleuchtungsquelle. Wenn hier eine Weißlicht-LED mit blauer LED angeordnet ist, so führt blaues Anregungslicht zur Anregung des gelbgrünen Konversionsfarbstoffs in der weißen LED, so dass gelbgrünes Licht wiederum über die Durchlichtbeleuchtungsachse zur Probe gelangt. Dies wird als störender Untergrund im Fluoreszenzbild wahrgenommen und kann sogar die eigentliche Fluoreszenz aus der Probe stark überdecken. Analoge Effekte zeigen sich bei Verwendung von Weißlicht-LEDs, die auf violetten oder UV-LEDs basieren, wenn das Anregungslicht der Fluoreszenzbeleuchtung im violetten bzw. UV-Spektralbereich Spektralanteile hat. In diesem Fall werden die entsprechenden Konversionsfarbstoffe in der Weißlicht-LED angeregt. Diese Anregung findet auch statt, wenn die Weißlicht-LED an sich ausgeschaltet ist.

Der vorliegenden Erfindung liegt folglich die Aufgabe zugrunde, in einem Mikroskop mit im Wechsel oder auch gleichzeitig schaltbarer Durchlicht-Hellfeldbeleuchtung mit Weißlicht-LED und Auflicht-Fluoreszenzbeleuchtung Störlicht bei der Auflicht-Fluoreszenzbeobachtung zu reduzieren.

### Offenbarung der Erfindung

Die Erfindung schlägt ein Verfahren zur Beleuchtung einer Probe in einem Mikroskop vor, bei dem die Probe abwechselnd oder gleichzeitig in Durchlicht-Hellfeldbeleuchtung und in Auflicht-Fluoreszenzbeleuchtung beleuchtbar ist, wobei als Lichtquelle für die Durchlicht-Hellfeldbeleuchtung eine Weißlicht-LED verwendet wird. Sowohl bei einer Durchlicht-Hellfeldbeleuchtung als auch bei einer Auflicht-Fluoreszenzbeleuchtung wird ein spektral selektives Anpassungsfilter an einem Ort des Beleuchtungsstrahlengangs der Durchlicht-Hellfeldbeleuchtung eingeschaltet. Dieses Anpassungsfilter weist einen spektralen Transmissionsverlauf auf, der im Wellenlängenbereich zumindest eines Maximums des Spektrums der Weißlicht-LED ein Minimum besitzt. Das Spektrum des auf die Probe gelangenden Anregungslichts der Auflicht-Fluoreszenzbeleuchtung weist hierbei Spektralanteile auf, die zur Anregung eines in der Weißlicht-LED vorhandenen Konversionsfarbstoffs dienen, wobei das Anpassungsfilter im Bereich dieser Spektralanteile das Transmissionsminimum aufweist, um die Anregung des Konversionsfarbstoffs zu reduzieren.

Erfindungsgemäß wird somit sowohl bei eingeschalteter Durchlicht-Hellfeldbeleuchtungseinrichtung als auch bei eingeschalteter Auflicht-Fluoreszenzbeleuchtungseinrichtung als auch im weniger häufig vorkommenden Fall einer kombinierten Durchlicht-Hellfeldbeleuchtung mit gleichzeitiger Auflicht-Fluoreszenzbeleuchtung ein spektrales Anpassungsfilter in den Beleuchtungsstrahlengang der Durchlicht-Hellfeldbeleuchtungseinrichtung eingebracht. Es sei hervorgehoben, dass das Anpassungsfilter auch dann in den Beleuchtungsstrahlengang der Durchlicht-Hellfeldbeleuchtung eingebracht wird, wenn die Lichtquelle für die Durchlichtbeleuchtung, also die Weißlicht-LED, ausgeschaltet ist. Daher wurde die Wortwahl getroffen, dass das Anpassungsfilter "an einem Ort des Beleuchtungsstrahlengangs" eingeschaltet wird. Gleichbedeutend hiermit wird der Ausdruck verwendet, wonach das Anpassungsfilter auf der DurchlichtBeleuchtungsachse angeordnet oder eingeschaltet ist. Der Begriff "Einschalten" des Anpassungsfilters ist in einer Weise zu interpretieren, dass er auch das dauerhafte Vorhandensein dieses Filters auf der Durchlichtbeleuchtungsachse einschließt. Es kann jedoch vorteilhaft sein, das Anpassungsfilter auf einem Filterschieber oder Filterrad anzubringen, der bzw. das für andere Mikroskopieverfahren, insbesondere die eingangs angesprochenen Kontrastierverfahren, das spektrale Anpassungsfilter von der Durchlichtbeleuchtungsachse entfernt und etwaige andere Filter in den Strahlengang bringt. Das spektrale Anpassungsfilter ist somit auf der Durchlichtbeleuchtungsachse zwischen der Probe und der Weißlicht-LED angeordnet bzw. anordenbar.

Es ist darauf hinzuweisen, dass das spektrale Anpassungsfilter nicht notwendiger Weise ein Einzelfilter sein muss, sondern dass es zwei oder mehr spektrale Filter umfassen kann, sodass die Kombination dieser zwei oder mehr spektralen Filter das spektrale Anpassungsfilter ergibt.

Es ist weiterhin darauf hinzuweisen, dass das spektrale Anpassungsfilter auch ein elektronisches Filter, wie ein transmissives Display, umfassen kann.

Das spektrale Anpassungsfilter weist bei vorliegender Erfindung einen spektralen Transmissionsverlauf auf, der im Wellenlängenbereich zumindest eines Maximums des Spektrums der Weißlicht-LED ein Transmissionsminimum besitzt. Ohne Einschränkung der Allgemeinheit soll die vorliegende Erfindung anhand eines Typs von Weißlicht-LEDs der eingangs beschriebenen Art erläutert werden, bei der die mit blauem Licht angeregte Weißlicht-LED ein Spektrum aufweist, welches ein Maximum im blauen Wellenlängenbereich (bei etwa 450 nm), ein Minimum im blaugrünen (bei etwa 500 nm) und ein weiteres Maximum im grüngelben Wellenlängenbereich (bei etwa 650 nm) aufweist. Das Prinzip der vorliegenden Erfindung ist jedoch nicht auf diesen Weißlicht-LED-Typ beschränkt, sondern kann auch bei anderen Weißlicht-LED-Typen Anwendung finden.

Gemäß vorliegender Erfindung reduziert das auf die Weißlicht-LED abgestimmte spektrale Anpassungsfilter Strahlung aus demjenigen Spektralbereich der Weißlicht-LED, die - um bei dem genannten Beispiel zu bleiben - aus dem blauen und/oder grüngelben Wellenlängenbereich stammt. Dies hat zum einen einen günstigen Effekt für die Durchlicht-Hellfeldbeleuchtung, da auf diese Weise die Intensität der transmittierten Strahlung im Bereich eines oder mehrerer spektralen Maxima reduziert wird, wodurch eine Annäherung an oder bei entsprechend weitergehender Auslegung des Anpassungsfilters eine vollständige Übereinstimmung mit dem Spektrum einer Halogenlampe, insbesondere mit vorgeschaltetem Wärmeschutz- und/oder Tageslichtfilter, erzielt werden kann. Zum anderen kann im Falle der Auflicht-Fluoreszenzbeleuchtung die Erfindung den eingangs erwähnten unerwünschten Effekt reduzieren oder ganz beseitigen: Besitzt der spektrale Transmissionsverlauf des Anpassungsfilters beispielsweise im blauen Wellenlängenbereich ein Transmissionsminimum, so kann das Anpassungsfilter verhindern, dass blaues Anregungslicht aus der Auflicht-Fluoreszenzbeleuchtung auf die für Durchlicht angeordnete Weißlicht-LED trifft. Wie bereits eingangs erwähnt, gelangt nämlich ein großer Teil des blauen Anregungslichts durch die Probe hindurch über die Durchlicht-Beleuchtungsachse zur Weißlicht-LED. Das auf der Durchlicht-Beleuchtungsachse angeordnete spektrale Anpassungsfilter verhindert somit die Anregung des gelbgrünen Konversionsfarbstoffs in der Weißlicht-LED. Weist das Anpassungsfilter einen spektralen Transmissionsverlauf auf, der beispielsweise im gelbgrünen Wellenlängenbereich ein Transmissionsminimum besitzt, so kann das auf der Durchlicht-Beleuchtungsachse angebrachte Anpassungsfilter vermeiden, dass nach Anregung des gelbgrünen Konversionsfarbstoffs durch blaues Anregungslicht von der Weißlicht-LED erzeugtes gelbgrünes Licht wiederum zur Probe gelangt.

In einer besonders vorteilhaften Ausgestaltung wird daher ein Anpassungsfilter verwendet, das in den Wellenlängenbereichen sämtlicher Maxima des Spektrums der Weißlicht-LED Transmissionsminima besitzt, also im vorliegenden Beispiel Transmissionsminima im blauen und im gelbgrünen Wellenlängenbereich. Nochmals sei betont, dass der Effekt der Anregung des gelbgrünen Konversionsfarbstoffs durch blaues Anregungslicht aus der Auflicht-Fluoreszenzbeleuchtung auch bei ausgeschalteter Weißlicht-LED, also ausgeschalteter Durchlichtbeleuchtungseinrichtung auftritt.

Die Erfindung ist also ideal dafür geeignet, zum einen den spektralen Verlauf der Durchlichtbeleuchtung mit einer Weißlicht-LED an den spektralen Verlauf einer Halogenlampe mit oder ohne Tageslichtfilter bzw. Wärmeschutzfilter anzupassen und gleichzeitig nach Umschaltung auf Auflicht-Fluoreszenzbeleuchtung den störenden Intensitätsuntergrund im Fluoreszenzbild zu eliminieren, der aus der Anregung von Farbstoffen der Durchlicht-Weißlicht-LED mit Anregungslicht aus der Auflicht-Fluoreszenzbeleuchtung stammt. Die in der Regel abgeschaltete Weißlicht-LED wird dann angeregt und strahlt die fluoreszierende Proben von unten an.

Die Erfindung kann insbesondere immer dann mit besonderem Vorteil eingesetzt werden, wenn das Spektrum des auf die Probe gelangenden Anregungslichts der Auflicht-Fluoreszenzbeleuchtung Anteile aufweist, die zur Anregung eines in der Weißlicht-LED vorhandenen Konversionsfarbstoffs dienen (können). Genau dann kommt es nämlich zu dem Effekt der Anregung von Konversionsfarbstoffen durch Anregungslicht der Fluoreszenzbeleuchtung auch bei ausgeschalteter Weißlicht-LED.

Die Vorschrift, wonach das Anpassungsfilter einen spektralen Transmissionsverlauf aufweist, der im "Wellenlängenbereich" eines Maximums (oder eines Minimums) des Spektrums der Weißlicht-LED ein Minimum (oder ein Maximum) besitzt, ist dahingehend zu verstehen, dass dieses Minimum (bzw. Maximum) in einem Bereich von ± 25 nm um das Maximum (bzw. Minimum) liegt. Abhängig von der Schärfe der Spitze des Maximums (oder Minimums) kann dieser Bereich auch geringer sein, nämlich bis herunter auf ± 10 nm oder sogar geringer als ± 10 nm. Insbesondere wird aber der Transmissionsverlauf des Anpassungsfilters derart entworfen, dass es sowohl bei der Durchlicht-Hellfeldbeleuchtung als auch bei der Auflicht-Fluoreszenzbeleuchtung zu den genannten positiven Effekten kommt.

Lediglich der Vollständigkeit halber sei erwähnt, dass eine Alternative zur hier behandelten Erfindung darin besteht, bei Auflicht-Fluoreszenzbeleuchtung einen Shutter in die Durchlichtbeleuchtungsachse zu bringen, der Anregungslicht, das durch die Probe in Richtung Durchlichtbeleuchtungsachse gelangt, vollständig von der Weißlicht-LED entfernt hält. Beim Wechsel zur Durchlicht-Hellfeldbeleuchtung muss der Shutter wieder aus dem Durchlichtbeleuchtungsstrahlengang entfernt werden.

Die vorliegende Erfindung eignet sich insbesondere auch zum Einsatz mit anderen Mikroskopieverfahren, wie den eingangs angesprochenen Kontrastierverfahren. Beim Phasenkontrasttrastverfahren ("Phaco") werden nur etwa 10 % des Lichtes vom Lichtring in Richtung Probe durchgelassen. Beim differenziellen Interferenzkontrastverfahren ("DIC") nehmen gekreuzte Polarisatoren einen Hauptteil der Lichtintensität. Schließlich kommt bei der Probenbetrachtung im Dunkelfeld kein direktes Licht, sondern nur an der Probe gestreutes Licht zur Beobachtung. Da die Beleuchtungssysteme in Mikroskopen in der Regel derart ausgelegt sind, dass für die erwähnten Kontratierverfahren auch ausreichend Licht zur Verfügung steht, ist die Intensität der Durchlichtbeleuchtung so hoch, dass eine Abschwächung durch das erfindungsgemäß eingesetzte zusätzliche Anpassungsfilter nicht zu Intensitätsproblemen führt, sondern sich im Gegenteil zur Intensitätsanspassung eignet.

Beim Einsatz der vorliegenden Erfindung zusammen mit Kontrastierverfahren ist es sinnvoll, beim Verlassen der Durchlicht-Hellfeldbeleuchtung und bei Wechsel zu einem Kontrastierverfahren das Anpassungsfilter aus dem Beleuchtungsstrahlengang der Durchlicht-Hellfeldbeleuchtung (manuell oder motorisch) zu entfernen, sodass wieder eine höhere Lichtintensität für das gewählte Kontrastierverfahren zur Verfügung steht.

Die Erfindung betrifft neben dem erwähnten Verfahren zur Mikroskopbeleuchtung ein entsprechendes Mikroskop. Sämtlichen Ausführungen im Zusammenhang mit einem Aspekt der vorliegenden Erfindung sollen jeweils auch für den anderen Aspekt gelten.

Die folgende Mikroskopbeleuchtungseinrichtung eignet sich besonders bevorzugt zur Durchlicht-Beleuchtung einer Probe in einem Mikroskop, wobei diese Probe insbesondere abwechselnd oder gleichzeitig in Durchlicht-Hellfeldbeleuchtung und Auflicht-Fluoreszenzbeleuchtung untersucht wird. Dabei wird als Lichtquelle für die Durchlicht-Hellfeldbeleuchtung eine Weißlicht-LED verwendet und sowohl bei Durchlicht-Hellfeldbeleuchtung als auch bei Auflicht-Fluoreszenzbeleuchtung das spektrale Anpassungsfilter an einem Ort des Beleuchtungsstrahlengangs der Durchlicht-Hellfeldbeleuchtung eingeschaltet. Das Spektrum der Weißlicht-LED besitzt zumindest zwei Maxima. Der auf die Weißlicht-LED abgestimmte spektrale Transmissionsverlauf des Anpassungsfilters weist im Wellenlängenbereich zumindest eines dieser Intensitätsmaxima der LED ein Transmissionsminimum auf. Bevorzugter Einsatzfall ist der bereits behandelte Weißlicht-LED-Typ mit zwei Maxima, die im blauen bzw. grün-gelben Wellenbereich liegen, wobei sich diese Bereiche auf die Bereich von 440 bis 470 nm (blauer Bereich) bzw. 520 bis 570 nm (grün-gelber Bereich) eingrenzen lassen.

Eine derart ausgestaltete Mikroskopbeleuchtungseinrichtung bringt bei der abwechselnden (oder gleichzeitigen) Durchlicht-Hellfeldbeleuchtung und Auflicht-Fluoreszenzbeleuchtung die bereits angesprochenen Vorteile. Obwohl oben der spektrale Verlauf einer Weißlicht-LED qualitativ kurz beschrieben wurde, gibt es zwischen verschiedenen Weißlicht-LEDs desselben Typs durchaus Unterschiede bezüglich der exakten Lage der Peaks (Maxima) im blauen und grüngelben Wellenlängenbereich sowie deren Amplitude. Gleiches gilt für Lage und Amplitude des zwischen den Maxima liegenden Minimums im Bereich zwischen 470 und 520 nm, insbesondere bei etwa 500 nm. Für die optimale Anpassung des Anpassungsfilters an die Weißlicht-LED ist die exakte Kenntnis des Emissionsverlaufs, also des Spektrums der Weißlicht-LED, wichtig.

Bevorzugter Weise besitzt der spektrale Transmissionsverlauf des Anpassungsfilters im Wellenlängenbereich eines Minimums des Spektrums der Weißlicht-LED ein Transmissionsmaximum. Optimalerweise ist der spektrale Transmissionsverlauf derart auf die Weißlicht-LED abgestimmt, dass das Spektrum der auf die Probe fallenden Durchlicht-Hellfeldbeleuchtung dem einer Halogenlampe entspricht. Für die visuelle Betrachtung ist es ausreichend, wenn dieses Spektrum mit dem Spektrum einer Halogenlampe zumindest im überwiegenden Teil des sichtbaren Wellenlängenbereichs übereinstimmt. Der überwiegende Teil des sichtbaren Wellenlängenbereichs erstreckt sich insbesondere von 420 bis 700 nm.

Je nach Anwendungsfall kann auch eine Übereinstimmung mit dem Spektrum einer Halogenlampe mit vorgeschaltetem Tageslichtfilter und/oder Wärmeschutzfilter hergestellt werden. Ein Wärmeschutzfilter soll in Verbindung mit einer Halogenlampe deren unerwünschten IR-Anteil im Spektrum möglichst entfernen. Ein typisches Wärmeschutzfilter besteht aus 2 mm KG1-Glas der Firma Schott mit folgendem spektralen Verlauf: Im sichtbaren Bereich von etwa 400 nm bis etwa 600 nm ist die Transmission nahezu konstant (bei knapp 90%). Ab 600 nm wird zunehmend Licht absorbiert. Bei 700 nm beträgt die Transmissivität nur noch 60%, bei 800 nm schon weniger als 30%. Ein Tageslichtfilter wirkt hingegen hauptsächlich im sichtbaren Spektralbereich und soll die Farbtemperatur der Halogenlampe beispielsweise von 3.200 K auf eine tageslichtähnliche Farbtemperatur von etwa 5.500 K "schieben". Dementsprechend wird ein solches Filter auch als Konversionsfilter bezeichnet. Das typische Spektrum eines solchen Filters verläuft näherungsweise umgekehrt exponentiell mit einem Maximum bei 400 nm (Transmission 100%), um dann zu höheren Wellenlängen abzuklingen (Transmission 40% bei 500 nm, Transmission 20% bei 600 nm, Transmission 10% bei 800 nm).

In der Praxis wird zunächst zum Beispiel mittels eines geeigneten Spektrometers die spektrale Emission der eingesetzten Weißlicht-LED exakt bestimmt. Dazu wird passend ein Anpassungsfilter designed und hergestellt. Es besteht in diesem Zusammenhang der Vorteil, dass die LED-Hersteller die LEDs nach der Herstellung vermessen und in sogenannten "Farb-Ranks" sortieren. Werden LEDs in größerer Stückzahl benötigt, liefert der Hersteller diese bestückt auf einem Gurt, wobei jeder Gurt nur LEDs aus einem Farb-Rank enthält. Zur Herstellung des erfindungsgemäßen Mikroskopbeleuchtungssets muss also nicht für jede LED ein anderes Filter designed und hergestellt werden, sondern nur für alle LEDs eines Gurtes. Dies reduziert den logistischen Aufwand deutlich.

Details zu den spektralen Verläufen von Weißlicht-LEDs und geeigneten Transmissionsverläufen von Anpassungsfiltern sind den weiter unten behandelten Ausführungsbeispielen zu entnehmen.

Die Erfindung betrifft schließlich auch ein Mikroskop zur Untersuchung einer Probe abwechselnd oder gleichzeitig in Durchlicht-Hellfeldbeleuchtung und in Auflicht-Fluoreszenzbeleuchtung, wobei das Mikroskop, eine Durchlicht-Hellfeldbeleuchtungseinrichtung und eine Auflicht-Fluoreszenzbeleuchtungseinrichtung aufweist, wobei als Lichtquelle für die Durchlicht-Hellfeldbeleuchtungseinrichtung eine Weißlicht-LED vorhanden ist, und wobei ein Anpassungsfilter an einem Ort des Beleuchtungsstrahlengangs der Durchlicht-Hellfeldbeleuchtungseinrichtung sowohl bei Durchlicht-Hellfeldbeleuchtung als auch bei Auflicht-Fluoreszenzbeleuchtung einschaltbar ist. Das Anpassungsfilter weist einen spektralen Transmissionsverlauf auf, der im Wellenlängenbereich zumindest eines Maximums des Spektrums der Weißlicht-LED ein Transmissionsminimum besitzt. Das Spektrum des auf die Probe gelangenden Anregungslichts der Auflicht-Fluoreszenzbeleuchtung weist hierbei Spektralanteile auf, die zur Anregung eines in der Weißlicht-LED vorhandenen Konversionsfarbstoffs dienen, wobei das Anpassungsfilter im Bereich dieser Spektralanteile das Transmissionsminimum aufweist, um die Anregung des Konversionsfarbstoffs zu reduzieren.

Weitere Ausgestaltungen eines solchen Mikroskopsystems, insbesondere des darin verwendeten Anpassungsfilters sind aus den obigen Ausführungen zur Erfindung entnehmbar.

Besonders bevorzugt ist eine Ausgestaltung des Mikroskops, bei der das Spektrum der Weißlicht-LED der Durchlicht-Hellfeldbeleuchtungseinrichtung zumindest zwei Maxima besitzt, die insbesondere im blauen bzw. grün-gelben Wellenlängenbereich liegen, wobei der spektrale Transmissionsverlauf des Anpassungsfilters im Wellenlängenbereich zumindest eines dieser Maxima ein Transmissionsminimum besitzt, und wobei das Spektrum der Weißlicht-LED zumindest ein Minimum besitzt, das zwischen den zumindest zwei Maxima liegt, wobei der spektrale Transmissionsverlauf des Anpassungsfilters im Wellenlängenbereich dieses zumindest einen Minimums ein Transmissionsmaximum besitzt. Zu den Vorteilen dieser Ausgestaltung sei auf die entsprechenden obigen Ausführungen verwiesen.

Eine für die mikroskopische Beobachtung und Untersuchung von Proben besonders geeignete Ausgestaltung erhält man, wenn der spektrale Transmissionsverlauf des Anpassungsfilters derart auf das Spektrum der Weißlicht-LED abgestimmt ist, dass der durch das Anpassungsfilter transmittierte relative spektrale Verlauf mit dem Spektrum einer Halogenlampe, insbesondere mit vorgeschaltetem Wärmeschutzfilter und/oder Tageslichtfilter, zumindest im überwiegenden Teil des sichtbaren Wellenlängenbereichs übereinstimmt. Dieser überwiegende Teil des sichtbaren Wellenlängenbereichs erstreckt sich in der Praxis insbesondere von 420 nm bis 700 nm. Zu weiteren Vorteilen dieser Ausgestaltung sei auf die obigen entsprechenden Ausführungen verwiesen.

Insbesondere zweckmäßig ist der Einsatz einer Weißlicht-LED, deren Spektrum zwei Maxima besitzt, die im Bereich 440 nm bis 470 nm bzw. 520 nm bis 570 nm liegen. Schließlich ist die Verwendung einer Weißlicht-LED günstig, deren Spektrum ein Minimum besitzt, das in einem Bereich zwischen 470 nm und 520 nm, insbesondere bei 500 nm, liegt. Solche Weißlicht-LEDs wurden eingangs dem Typus von Weißlicht-LEDs zugeordnet, die mit blauem Licht angeregt werden. Insbesondere bei diesem Weißlicht-LED-Typus lassen sich Anpassungsfilter designen, die sowohl das durch Fluoreszenzanregung erzeugte Störlicht stark reduzieren als auch das Spektrum der Durchlichtbeleuchtung an das einer Halogenlampe (insbesondere mit Wärmeschutzfilter) stark annähern können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

- Figur 1: zeigt neben einer Augenempfindlichkeitskurve (K1) das Spektrum (K2) einer Weißlicht-LED, das Spektrum (K3) einer Halogenlampe mit Wärmeschutzfilter und das angepasste Spektrum (K4) einer WeißlichtLED;
- Figur 2: zeigt den Transmissionsverlauf eines Anpassungsfilters zur Anpassung des Spektrums einer Weißlicht-LED;
- Figur 3: zeigt das Beispiel eines fehlerhaft angepassten Spektrums (K4') einer Weißlicht-LED;
- Figur 4: zeigt ein Mikroskop in schematischer Ansicht; und
- Figur 5: zeigt Transmissionskurven (T1 bis T3) eines typischen Fluoreszenzfilters.

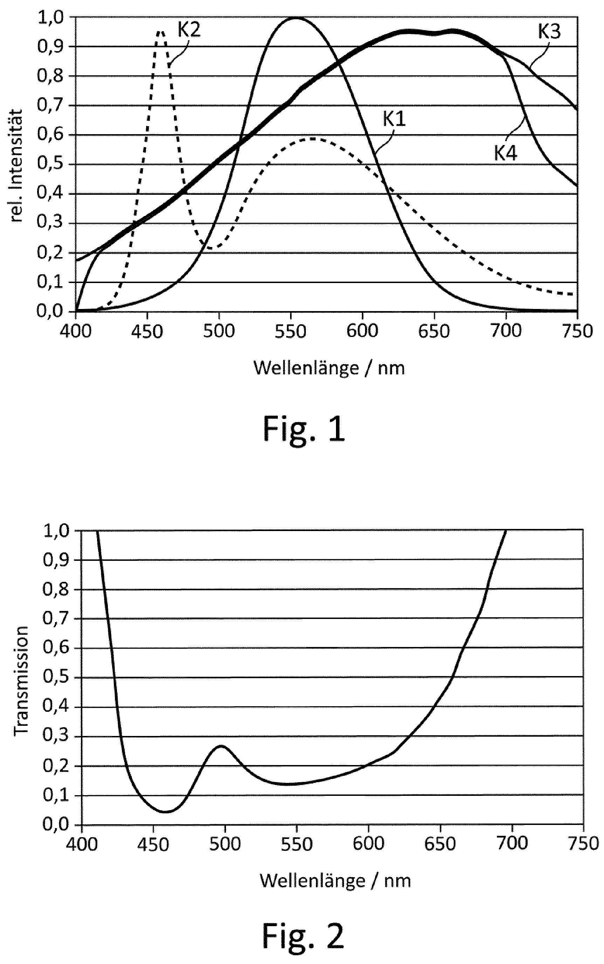

In Figur 1 sind schematisch vier verschiedene Kurven K1 bis K4 von relativen Intensitäten gegen die Wellenlänge (in Nanometer) dargestellt. Die dargestellten Intensitäten sind auf 1,0 normiert. Der dargestellte Wellenlängenbereich umfasst 400-750 nm und somit den sichtbaren Wellenlängenbereich von Violett, über Blau, Grün, Gelb, Orange und Rot.

Die Kurve K1 stellt die Augenempfindlichkeitskurve dar mit ihrer höchsten Empfindlichkeit im Wellenlängenbereich um 550 nm (grün-gelb) und dem zu beiden Seiten des Maximums gaußförmig abfallenden Verlauf zu höheren bzw. tieferen Wellenlängen hin. Man erkennt, dass unterhalb von etwa 420 nm (violett-blau) und oberhalb von etwa 700 nm (rot) das Auge sehr unempfindlich wird, also außerhalb des Bereichs zwischen 420 nm und 700 nm eine Wahrnehmung von Farben durch das menschliche Auge kaum noch möglich ist. Für die visuelle Betrachtung mikroskopisch untersuchter Proben ist deshalb eine Anpassung im Spektralbereich zwischen 420 nm und 700 nm ausreichend.

Die gestrichelte Kurve K2 zeigt den typischen spektralen Verlauf einer Weißlicht-LED, die im blauen Wellenlängenbereich emittiert und einen Konversionsfarbstoff zum Leuchten im grün-gelben Spektralbereich anregt. Entsprechend liegt das erste Maximum im blauen Wellenlängenbereich bei etwa 450-460 nm und das zweite Maximum im grün-gelben Spektralbereich bei etwa 550-560 nm. Man erkennt, dass der Bereich des zweiten Maximums breiter ausgeprägt ist als der des ersten. Zwischen diesen Maxima liegt ein Minimum bei etwa 500 nm. Bei verschiedenen Weißlicht-LEDs desselben Typs (hier blaue LED mit Konversionsfarbstoff) können Lage und Höhe der Maxima und Minima des spektralen Verlaufs unterschiedlich sein. LEDs mit übereinstimmenden Maxima und Minima im spektralen Verlauf werden von den Herstellern einem bestimmten Farb-Rank zugeordnet.

Die Kurve K3 stellt den relativen spektralen Verlauf einer Halogenlampe mit Wärmeschutzfilter dar. Man erkennt ein Maximum bei etwa 650 nm (rot). Im ansteigenden Bereich bis etwa 600 nm wird die Kurve K3 bestimmt durch die Emission eines schwarzen Strahlers nach Planck. Oberhalb 600 nm flacht die Kurve ab und fällt nach Erreichen des Maximums bei etwa 650 nm wieder ab. Dies wird verursacht durch das zusätzliche Wärmeschutzfilter.

Die mit K4 bezeichnete Kurve entspricht innerhalb des Bereichs von etwa 420 nm bis 700 nm im Wesentlichen dem Verlauf der Kurve K3, wobei außerhalb dieses Bereichs eine starke Intensitätsabnahme erfolgt. Die Kurve K4 kann erzeugt werden durch Vorschalten eines Anpassungsfilters mit einem in Figur 2 dargestellten Transmissionsverlauf vor eine Weißlicht-LED mit einem spektralen Verlauf gemäß Kurve K2.

Figur 2 zeigt deutlich die Lage der Minima und Maxima des Transmissionsverlaufs eines besonders geeigneten Anpassungsfilters. Die Transmission ist hier mit Werten zwischen 0 und 1 angegeben, entsprechend einer vollständigen Absorption bei 0 und einer vollständigen Transmission bei 1,0. Der dargestellte Wellenlängenbereich entspricht dem aus Figur 1. Der Transmissionsverlauf des Anpassungsfilters zeigt ein erstes Transmissionsminimum bei etwa 450-460 nm, etwa an der Stelle, an der die Kurve K2 ihr erstes Maximum besitzt. Das zweite Transmissionsminimum der Transmissionskurve liegt bei etwa 550 nm, also in einem Bereich, in dem die Kurve K2 ihr zweites Maximum (bei 550-560 nm) besitzt. Mit Bereich sei ein Bereich von ± 25 nm um einen bestimmten Wert gemeint. Man erkennt, dass die Lage eines Maximums in der spektralen Kurve K2 und eines Transmissionsminimums in dem Transmissionsverlauf des Filters nicht exakt übereinstimmen müssen. Zwischen den beiden Transmissionsminima im Transmissionsverlauf des Anpassungsfilters liegt ein Transmissionsmaximum bei etwa 500 nm. Dieses Transmissionsmaximum liegt um wenige Nanometer neben dem Minimum im spektralen Verlauf der Kurve K2.

Der Transmissionsverlauf gemäß Figur 2 sorgt dafür, dass das durch den Anpassungsfilter transmittierte Licht einer Weißlicht-LED mit Spektrum K2 gemäß Figur 1 einen spektralen Verlauf wie eine herkömmliche Halogenlampe mit Wärmeschutzfilter aufweist. Somit ist ein solches Anpassungsfilter optimal für eine mikroskopische Untersuchung einer Probe im Durchlicht-Hellfeld geeignet, ohne dass der Betrachter Unterschiede zur herkömmlichen Mikroskopbeleuchtung mit Halogenlampen wahrnehmen würde. Es sei an dieser Stelle erwähnt, dass sich in der beschriebenen Weise auch entsprechende Anpassungsfilter für eine Beobachtung mit Kameras designen lassen. Ziel wäre in diesem Fall also, dass das Kamerabild bei Mikroskopbeleuchtung mit einer Weißlicht-LED den möglichst gleichen Eindruck hervorruft wie bei Mikroskopbeleuchtung mit einer herkömmlichen Halogenlampe (evtl. mit Wärmeschutzfilter und/oder Tageslichtfilter). Dieser Anwendungsfall ist jedoch weniger kritisch, da sich ein störender Untergrund mit dem (häufig automatischen) Weißabgleich der Kamera entfernen lässt.

Durch die beschriebene Filterung des im Durchlicht genutzten Weißlicht-LED-Lichts wird natürlich die Intensität des auf die Probe fallenden Durchlichtlichts insgesamt reduziert. Für die in Figur 2 dargestellte Filterung entspricht dies insgesamt einer Reduktion der LED-Intensität um den Faktor 5. Da aber bei der Durchlichtbeleuchtung ausreichend Intensität zur Verfügung steht, stellt diese Reduktion kein Problem dar. Für etwaige nachfolgend auszuführende Kontrastierverfahren muss das Anpassungsfilter dann aber ausgeschaltet werden, um dort noch genügend Durchlicht zur Verfügung stellen zu können.

Zur Funktionsweise des Anpassungsfilters mit seinem Transmissionsverlauf gemäß Figur 2 im Einzelnen: Das Anpassungsfilter reduziert den bereits oben ausführlich beschriebenen Untergrund bei der Auflicht-Fluoreszenzbeleuchtung durch die unerwünschte Fluoreszenzanregung des Konversionsfarbstoffs der Weißlicht-LED deutlich. Wenn dieses Filter bei der Auflicht-Fluoreszenzbeleuchtung eingeschwenkt wird, wird zunächst bei einer Fluoreszenzanregung der Probe mit blauem Licht (BP 470/40), also beispielsweise zwischen 450 nm und 490 nm, dieses blaue Licht auf dem Weg durch die Probe zur Weißlicht-LED der Durchlichtbeleuchtungseinrichtung um etwa den Faktor 10 reduziert (vgl. erstes Transmissionsminimum des Transmissionsverlauf gemäß Figur 2), da die mittlere Transmission des Filters in diesem Wellenlängenbereich etwa 10% ist. Gleichzeitig wird aber das in der Konversionsschicht der Weißlicht-LED noch entstehende, unerwünschte gelb-grüne Licht auf seinem Weg von der LED zurück zur Probe mindestens um den Faktor 5 reduziert (Transmission des Filters in diesem Wellenlängenbereich kleiner 20%). Insgesamt wird die Intensität des störenden Untergrunds somit mindestens um den Faktor 50 reduziert. Somit kann trotz vorhandener Durchlichtbeleuchtungseinrichtung mit Weißlicht-LED eine Fluoreszenzuntersuchung der Probe ausgeführt werden, ohne einen Shutter auf die Durchlichtbeleuchtungsachse bringen oder die Weißlicht-LED ganz entfernen zu müssen, und ohne störende Untergrundbeleuchtung der Probe hinnehmen zu müssen. Gleichzeitig erzeugt der Transmissionsverlauf des Anpassungsfilters gemäß Figur 2 eine Probenbeleuchtung im Durchlicht-Hellfeld mit dem spektralen Verlauf gemäß Kurve K4 aus Figur 1.

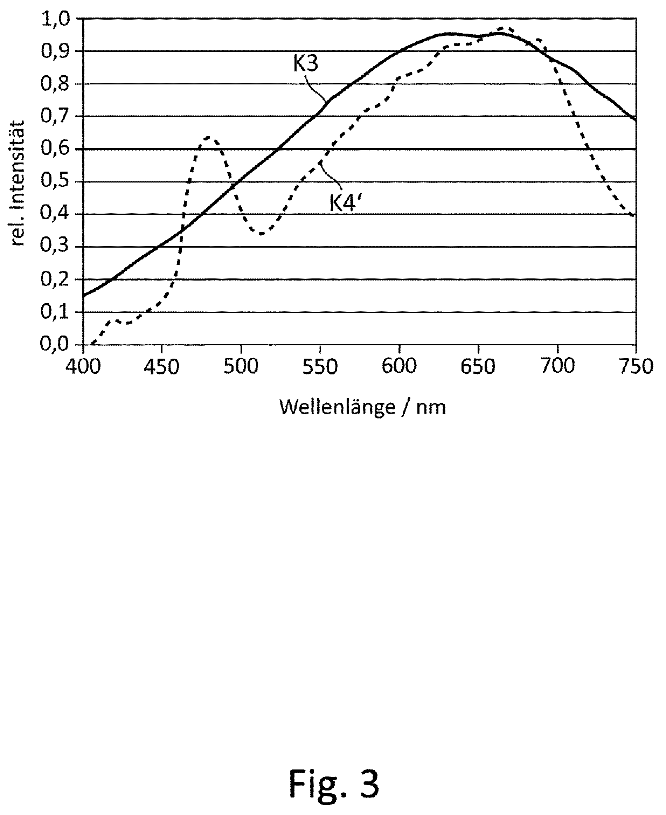

Es sei darauf hingewiesen, dass eine exakte Zuordnung von Weißlicht-LED und Anpassungsfilter außerordentlich wichtig für die mit der Erfindung zu erzielenden Vorteile ist, wie anhand von Figur 3 dargestellt wird. In Figur 3 ist der relative Intensitätsverlauf K4' dargestellt für den Fall, wenn das Anpassungsfilter aus Figur 2 mit einer Weißlicht-LED verwendet wird, deren Spektrum um nur 10 nm gegenüber dem Spektrum K2 aus Figur 1 verschoben ist. Da das Maximum bei etwa 450 nm und das Minimum bei etwa 500 nm sehr ausgeprägt sind, kommt es in diesen Bereichen zu starken spektralen Störungen, wenn LED und Filter nicht zueinander passen. Nur wenn das Anpassungsfilter also exakt auf die jeweilige Weißlicht-LED abgestimmt ist, kann die Anpassung an den spektralen Verlauf einer Halogenlampe mit Wärmeschutzfilter (Kurve K3) optimal erfolgen.

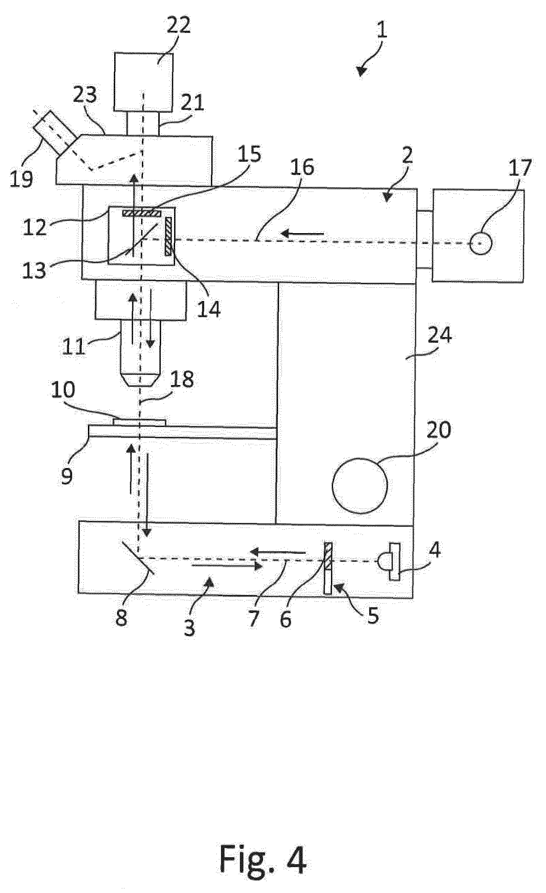

Figur 4 zeigt ein Mikroskop 1 in schematischer Ansicht mit seinen wesentlichen Komponenten, wobei das Mikroskop 1 zur Untersuchung einer Probe 10 mit Auflicht-Fluoreszenzbeleuchtung und/oder in Durchlicht-Hellfeldbeleuchtung betreibbar ist.

Die Auflicht-Fluoreszenzbeleuchtungseinrichtung 2 umfasst folgende Komponenten: Eine Auflichtbeleuchtungslichtquelle 17, beispielsweise eine Quecksilber-Dampflampe, sowie einen Fluoreszenzfilterblock 12, die auf der Auflichtbeleuchtungsachse 16 angeordnet sind. Der Fluoreszenzfilterblock 12 enthält ein spektrales Anregungsfilter 14, in Ausbreitungsrichtung des Auflichtbeleuchtungslichts gefolgt von einem Strahlteiler 13. Das Anregungsfilter 14 dient zur spektralen Selektion eines oder mehrerer Wellenlängenbereiche, die zur Anregung von Fluoreszenzen in der Probe 10 geeignet sind. Der Strahlteiler 13 lenkt das durch das Filter 14 transmittierte Anregungslicht in Richtung Probe 10 um. Weiterhin ist ein Sperrfilter 15 im Fluoreszenzfilterblock 12 vorhanden. Das Sperrfilter 15 sorgt dafür, dass nur das von der Probe emittierte (grüne) Fluoreszenzlicht zum Betrachter gelangt und blockt somit das Anregungslicht.

Die Durchlicht-Hellfeldbeleuchtungseinrichtung 3 umfasst eine Weißlicht-LED 4 als Lichtquelle gefolgt von einem Filterschieber 5 mit einem (schraffiert gezeichnetem) spektralen Anpassungsfilter 6 auf der Durchlichtbeleuchtungsachse 7. Das durch das spektrale Anpassungsfilter 6 transmittierte Licht gelangt auf den Umlenkspiegel 8 der Durchlicht-Hellfeldbeleuchtungseinrichtung 3. Bei beiden Beleuchtungseinrichtungen 2 und 3 sind der Übersichtlichkeit halber vorhandene Beleuchtungsoptiken, wie Linsen, nicht dargestellt, da sie für vorliegende Erläuterungen nicht relevant sind.

Weitere bekannte übliche Komponenten eines Mikroskops 1 sind der Mikroskoptisch 9 mit der darauf befindlichen Probe 10, wobei der Mikroskoptisch 9 mittels eines am Stativ 24 des Mikroskops 1 angebrachten Fokussierknopfs 20 in z-Richtung, also parallel zur optischen Achse 18, zu Fokussierzwecken verstellbar ist. Weiterhin dargestellt ist ein Mikroskopobjektiv 11, der Mikroskoptubus 23 sowie ein Okular 19; schließlich ein Kameraport 21 mit angeschlossener Kamera 22. Das Objektiv 11 kann Bestandteil eines Objektivrevolvers sein, der mehrere unterschiedliche Objektive trägt. Der Tubus 23 weist in seinem Inneren Umlenkprismen auf, die der Übersichtlichkeit halber hier nicht dargestellt sind, und die dazu dienen, den Abbildungsstrahlengang des Mikroskops 1 zum Beobachter und zur Kamera 22 zu lenken.

Der von der Auflicht-Fluoreszenzbeleuchtungseinrichtung 2 erzeugte Auflichtbeleuchtungsstrahlengang mit seiner Achse 16 breitet sich entlang der in Figur 4 dargestellten Pfeile aus: Zunächst durchquert er das Anregungsfilter 14, um vom Strahlteiler 13 in Richtung Probe 10 gelenkt zu werden. In der Probe werden Fluoreszenzen angeregt, wobei jedoch tatsächlich der Hauptteil des Anregungslichts die Probe 10 passiert und sich entlang der Durchlichtbeleuchtungsachse 7 in die Durchlicht-Hellfeldbeleuchtungseinrichtung 3 ausbreitet. Über den Umlenkspiegel 8 gelangt das Anregungslicht zum Anpassungsfilter 6 (oder allgemeiner zur Stelle des Filterschiebers 5) und von dort zur Weißlicht-LED 4. Beispielsweise gelangt blaues Anregungslicht (450 nm bis 490 nm) auf diesem Weg zur Weißlicht-LED 4. Dieses blaue Anregungslicht ist hervorragend dazu geeignet, den Konversionsfarbstoff in der Weißlicht-LED anzuregen, der dann im gelb-grünen Bereich Licht emittiert. Dieses Licht (wiederum dargestellt durch Pfeile) breitet sich entlang der Durchlichtbeleuchtungsachse 7 in Richtung Umlenkspiegel 8 aus und gelangt von dort auf die Probe 10. Das gelb-grüne Licht gelangt von der Probe 10 über das Objektiv 11 zum Fluoreszenzfilterblock 12 und kann das Sperrfilter 15 passieren und somit das Okular 19 oder die Kamera 22 erreichen. Ohne Gegenmaßnahmen macht sich dieser Effekt als gelb-grüner Untergrund im Fluoreszenzbild sehr störend bemerkbar.

Aufgrund des Anpassungsfilters 6 mit seinen anhand der Figuren 1 bis 3 geschilderten Eigenschaften und Vorteilen gelingt es, diesen störenden Untergrund zu beseitigen und gleichzeitig das Licht der Weißlicht-LED 4 dem herkömmlichen Halogenlampenlicht mit Wärmeschutzfilter anzupassen.

Hierzu wird im Falle der Fluoreszenzbeleuchtung sowie im Falle der Hellfeldbeleuchtung über den Filterschieber 5 das Anpassungsfilter 6 auf die Durchlichtbeleuchtungsachse 7, also an einen Ort des Durchlichtbeleuchtungsstrahlengangs eingebracht. Es sei von einem Transmissionsverlauf des Anpassungsfilters 6 ausgegangen, wie er in Figur 2 dargestellt ist. Aufgrund des Transmissionsminimums im Bereich 450-470 nm, kann das blaue Anregungslicht, das durch die Probe 10 gelangt ist, sich nicht weiter in Richtung Weißlicht-LED 4 ausbreiten, da es zum größten Teil vom Anpassungsfilter 6 absorbiert wird (Transmissionsgrad kleiner 10%). Verbleibendes noch transmittiertes blaues Anregungslicht vermag den Konversionsfarbstoff der Weißlicht-LED 4 anzuregen. Entsprechendes gelb-grünes Licht breitet sich in Richtung Durchlichtbeleuchtungsachse 7 aus und trifft auf das Anpassungsfilter 6. Aufgrund des ausgeprägten Transmissionsminimums im Bereich 540-570 nm (Transmissionsgrad weniger 20%) wird dieses unerwünschte gelb-grüne Licht stark reduziert. Aufgrund beider Effekte erhält man eine Reduktion des störenden gelb-grünen Untergrunds um mehr als den Faktor 50.

Gleichzeitig ist das Anpassungsfilter 6 ideal dafür geeignet, in der in Figur 4 dargestellten Durchlicht-Hellfeldbeleuchtungseinrichtung 3 ein Beleuchtungslicht für die Probe 10 zu erzeugen, dessen Spektrum zumindest im wesentlichen Bereich des sichtbaren Lichts mit dem einer Halogenlampe mit Wärmeschutzfilter zusammenfällt (vgl. Kurve K4 aus Figur 1). Bei der Durchlicht-Hellfeldbeleuchtung ist üblicherweise die Lichtquelle 17 der Auflicht-Fluoreszenzbeleuchtungseinrichtung 2 ausgeschaltet.

Mit dem in Figur 4 dargestellten Mikroskopsystem 1 können auch die bereits behandelten Kontrastierverfahren ausgeführt werden. Hierzu ist es empfehlenswert, das Anpassungsfilter 6 zu entfernen, um ausreichend Lichtintensität für das jeweilige Kontrastierverfahren anbieten zu können. Bei geeigneter Anordnung des Filterschiebers 5 auf der Durchlichtbeleuchtungsachse 7 kann anstelle des Anpassungsfilters 6 eine Leerposition ohne Filter oder ein anderes geeignetes optisches Element, das für das jeweilige Kontrastierverfahren benötigt wird, in den Beleuchtungsstrahlengang eingebracht werden.

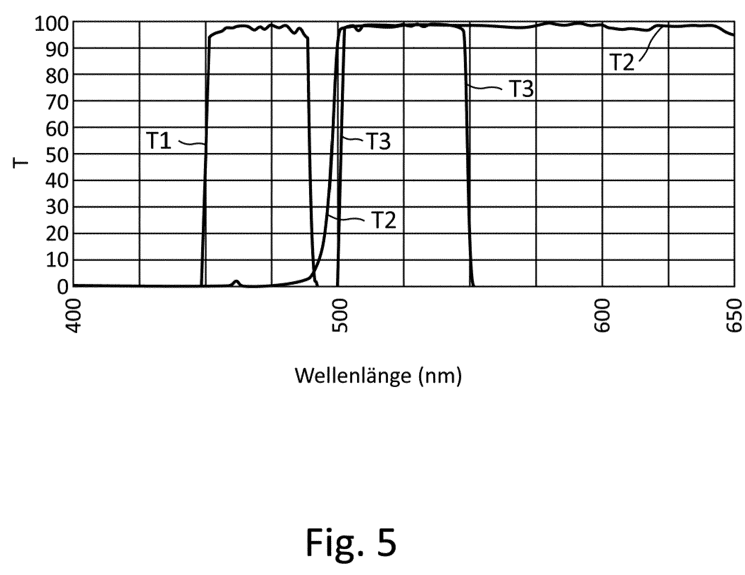

Figur 5 zeigt den spektralen Transmissionsverlauf eines typischen Fluoreszenzfilters für die grüne FITC-Emission eines mit dem entsprechenden Farbstoff eingefärbten Präparats, die mit blauem Licht zwischen 450 nm und 490 nm angeregt wird. Die Transmissionskurve T1 zeigt den spektralen Transmissionsverlauf des Anregungsfilters ET 470/40x, der im spektralen Bereich zwischen 450 nm und 490 nm eine Transmissivität von nahezu 100% aufweist. Dieses Anregungsfilter stellt beispielsweise das Anregungsfilter 14 aus Figur 4 dar. Ein Vergleich mit Figur 2 zeigt, dass im Bereich 450 nm bis 490 nm dieses Anregungsfilters das Anpassungsfilter eine mittlere Transmission von etwa 11% besitzt. Somit wird durch die Probe gelangtes Anregungslicht etwa um den Faktor 10 reduziert.

Das als Sperrfilter 15 einsetzbare Emissionsfilter ET 525/50m hat im Bereich von 500 nm bis 550 nm eine Transmissivität von nahezu 100% (vgl. Transmissionskurve T3). Somit kann durch Fluoreszenz angeregtes grünes Licht dieses Filter passieren. Ein Vergleich mit Figur 2 zeigt, dass das Anpassungsfilter in diesem Bereich von 500 nm bis 550 nm eine mittlere Transmission von etwa 18% aufweist. Somit kann insgesamt das störende Untergrundlicht aus dem Konversionsfarbstoff der Weißlicht-LED um etwa den Faktor 50 reduziert werden. Die Kurve T2 gehört zum dichromatischen Teiler 13 aus Fig.4. Der dichromatische Teiler 13 reflektiert die Wellenlängen, die vom Anregungsfilter 14 hindurchgelassen werden, in Richtung Objektiv 11 bzw. Probe 10. Das von der Probe 10 emittierte Fluoreszenzlicht, das längerwellig ist als das Anregungslicht, wird vom dichromatischen Teiler 13 im Bereich der Transmission des Emissionsfilters 15 hindurchgelassen. Ideale dichromatische Teiler 13 haben demnach keine Transmission im Bereich der Anregungswellenlängen und maximale Transmission im Bereich der Emissionswellenlängen.

### Bezugszeichenliste

- 1: Mikroskop
- 2: Auflicht-Fluoreszenzbeleuchtungseinrichtung
- 3: Durchlicht-Hellfeldbeleuchtungseinrichtung
- 4: Weißlicht-LED
- 5: Filterschieber
- 6: Anpassungsfilter
- 7: Durchlichtbeleuchtungsachse
- 8: Umlenkspiegel
- 9: Mikroskoptisch
- 10: Probe
- 11: Objektiv
- 12: Fluoreszenzfilterblock
- 13: Strahlteiler
- 14: Anregungsfilter
- 15: Sperrfilter
- 16: Auflichtbeleuchtungsachse
- 17: Auflichtbeleuchtungslichtquelle
- 18: optische Achse
- 19: Okular
- 20: Fokussierknopf
- 21: Kameraport
- 22: Kamera
- 23: Tubus
- 24: Stativ

- K1 - K4: Kurven
- T1 - T3: Transmissionskurven

## Patentansprüche

1. Verfahren zur Beleuchtung einer Probe (10) in einem Mikroskop (1), wobei die Probe (10) abwechselnd oder gleichzeitig in Durchlicht-Hellfeldbeleuchtung und in Auflicht-Fluoreszenzbeleuchtung untersucht wird,
wobei als Lichtquelle für die Durchlicht-Hellfeldbeleuchtung eine Weißlicht-LED (4) verwendet wird und sowohl bei Durchlicht-Hellfeldbeleuchtung als auch bei Auflicht-Fluoreszenzbeleuchtung ein Anpassungsfilter (6) an einem Ort des Beleuchtungsstrahlengangs der Durchlicht-Hellfeldbeleuchtung eingeschaltet wird,
wobei das Anpassungsfilter (6) einen auf die Weißlicht-LED abgestimmten spektralen Transmissionsverlauf aufweist, der im Wellenlängenbereich zumindest eines Maximums des Spektrums der Weißlicht-LED (4) ein Transmissionsminimum besitzt,
wobei das Spektrum des auf die Probe (10) gelangenden Anregungslichts der Auflicht-Fluoreszenzbeleuchtung Spektralanteile aufweist, die zur Anregung eines in der Weißlicht-LED (4) vorhandenen Konversionsfarbstoffs dienen, wobei das Anpassungsfilter (6) im Bereich dieser Spektralanteile das Transmissionsminimum aufweist, um die Anregung des Konversionsfarbstoffs zu reduzieren.

2. Verfahren nach Anspruch 1, **dadurch gekennzeichnet, dass** das Anpassungsfilter (6) auch dann im Beleuchtungsstrahlengang der Durchlicht-Hellfeldbeleuchtung eingeschaltet wird, wenn die Weißlicht-LED (4) ausgeschaltet ist.

3. Verfahren nach Anspruch 1 oder 2, **dadurch gekennzeichnet, dass** als Anpassungsfilter (6) ein Filter mit einem spektralen Transmissionsverlauf verwendet wird, der in den Wellenlängenbereichen der Maxima des Spektrums der Weißlicht-LED (4) Minima besitzt.

4. Verfahren nach einem der Ansprüche 1 bis 3, **dadurch gekennzeichnet, dass** als Anpassungsfilter (6) ein Filter mit einem spektralen Transmissionsverlauf verwendet wird, der in den Wellenlängenbereichen der Minima des Spektrums der Weißlicht-LED (4) Transmissionsmaxima besitzt.

5. Verfahren nach Anspruch 1 bis 4, **dadurch gekennzeichnet, dass** der spektrale Transmissionsverlauf des Anpassungsfilters (6) derart auf das Spektrum der Weißlicht-LED (4) abgestimmt ist, dass der durch das Anpassungsfilter (6) transmittierte relative spektrale Verlauf mit dem Spektrum einer Halogenlampe, insbesondere mit vorgeschaltetem Tageslichtfilter und/oder Wärmeschutzfilter, zumindest im überwiegenden Teil des sichtbaren Wellenlängenbereichs übereinstimmt.

6. Verfahren nach Anspruch 5, **dadurch gekennzeichnet, dass** der durch das Anpassungsfilter (6) transmittierte relative spektrale Verlauf mit dem Spektrum einer Halogenlampe mit vorgeschaltetem Tageslichtfilter und/oder Wärmeschutzfilter zumindest im überwiegenden Teil des sichtbaren Wellenlängenbereichs übereinstimmt.

7. Mikroskop (1) zur Untersuchung einer Probe mit
einer Durchlicht-Hellfeldbeleuchtungseinrichtung (3) und
einer Auflicht-Fluoreszenzbeleuchtungseinrichtung (2), wobei diese beiden Beleuchtungseinrichtungen (2, 3) abwechselnd oder zeitgleich einschaltbar sind, und
wobei als Lichtquelle für die Durchlicht-Hellfeldbeleuchtungseinrichtung eine Weißlicht-LED (4) vorhanden ist, und wobei ein spektrales Anpassungsfilter (6) an einem Ort des Beleuchtungsstrahlengangs der Durchlicht-Hellfeldbeleuchtungseinrichtung (3) sowohl bei eingeschalteter Durchlicht-Hellfeldbeleuchtungseinrichtung als auch bei eingeschalteter Auflicht-Fluoreszenzbeleuchtungseinrichtung einschaltbar ist, und wobei das Anpassungsfilter (6) einen spektralen Transmissionsverlauf aufweist, der im Wellenlängenbereich zumindest eines Maximums des Spektrums der Weißlicht-LED (4) ein Transmissionsminimum aufweist,
wobei das Spektrum des auf die Probe (10) gelangenden Anregungslichts der Auflicht-Fluoreszenzbeleuchtungseinrichtung Spektralanteile aufweist, die zur Anregung eines in der Weißlicht-LED (4) vorhandenen Konversionsfarbstoffs dienen, wobei das Anpassungsfilter (6) im Bereich dieser Spektralanteile das Transmissionsminimum aufweist, um die Anregung des Konversionsfarbstoffs zu reduzieren.

8. Mikroskop nach Anspruch 7, **dadurch gekennzeichnet, dass** das Spektrum der Weißlicht-LED (4) zumindest zwei Maxima besitzt, die insbesondere im blauen bzw. grün-gelben Wellenlängenbereich liegen, und der spektrale Transmissionsverlauf des Anpassungsfilters (6) im Wellenlängenbereich zumindest eines dieser Maxima ein Transmissionsminimum besitzt, und das Spektrum der Weißlicht-LED (4) zumindest ein Minimum besitzt, das zwischen den zumindest zwei Maxima liegt, und der spektrale Transmissionsverlauf des Anpassungsfilters (6) im Wellenlängenbereich dieses zumindest einen Minimums ein Transmissionsmaximum besitzt.

9. Mikroskop nach Anspruch 7 oder 8, **dadurch gekennzeichnet, dass** der spektrale Transmissionsverlauf des Anpassungsfilters (6) derart auf das Spektrum der Weißlicht-LED (4) abgestimmt ist, dass der durch das Anpassungsfilter (6) transmittierte relative spektrale Verlauf mit dem Spektrum einer Halogenlampe zumindest im überwiegenden Teil des sichtbaren Wellenlängenbereichs übereinstimmt.

10. Mikroskop nach Anspruch 9, **dadurch gekennzeichnet, dass** der durch das Anpassungsfilter (6) transmittierte relative spektrale Verlauf mit dem Spektrum einer Halogenlampe mit vorgeschaltetem Wärmeschutzfilter und/oder Tageslichtfilter zumindest im überwiegenden Teil des sichtbaren Wellenlängenbereichs übereinstimmt.

11. Mikroskop nach Anspruch 9 oder 10, **dadurch gekennzeichnet, dass** sich der überwiegende Teil des sichtbaren Wellenlängenbereichs von 420 nm bis 700 nm erstreckt.

12. Mikroskop nach einem der Ansprüche 7 bis 11, **dadurch gekennzeichnet, dass** das Spektrum der Weißlicht-LED (4) zwei Maxima besitzt, die im Bereich 440 nm bis 470 nm bzw. 520 nm bis 570 nm liegen.

13. Mikroskop nach einem der Ansprüche 7 bis 12, **dadurch gekennzeichnet, dass** das Spektrum der Weißlicht-LED (4) ein Minimum besitzt, das in einem Bereich zwischen 470 nm und 520 nm, insbesondere bei 500 nm, liegt.

## Claims

1. A method for illuminating a sample (10) in a microscope (1), the sample (10) being analysed alternately or simultaneously in transmitted light bright field illumination and in incident light fluorescence illumination,
wherein a white light LED (4) is used as the light source for the transmitted light bright field illumination, and a correction filter (6) at a location in the illumination beam path of the transmitted light bright field illumination is activated both in transmitted light bright field illumination and in incident light fluorescence illumination,
wherein the correction filter (6) has a spectral transmission profile which is tuned to the white light LED and which has a transmission minimum in the wavelength range of at least one maximum of the spectrum of the white light LED (4),
wherein the spectrum of the excitation light of the incident light fluorescence illumination reaching the sample (10) has spectral components serving to excite a conversion dye which is present in the white light LED (4), the correction filter (6) having the transmission minimum in the range of these spectral components to reduce the stimulation of the conversion dye.

2. The method according to claim 1, **characterised in that** the correction filter (6) is activated in the illumination beam path of the transmitted light bright field illumination even when the white light LED (4) is switched off.

3. The method according to either claim 1 or claim 2, **characterised in that** a filter having a spectral transmission profile which has minima in the wavelength ranges of the maxima of the spectrum of the white light LED (4) is used as the correction filter (6).

4. The method according to any one of claims 1 to 3, **characterised in that** a filter having a spectral transmission profile which has transmission maxima in the wavelength ranges of the minima of the spectrum of the white light LED (4) is used as the correction filter (6).

5. The method according to claims 1 to 4, **characterised in that** the spectral transmission profile of the correction filter (6) is tuned to the spectrum of the white light LED (4) in such a way that the relative spectral profile which is transmitted through the correction filter (6) corresponds to the spectrum of a halogen lamp, in particular comprising an upstream daylight filter and/or thermal protection filter, at least in the predominant part of the visible wavelength range.

6. The method according to claim 5, **characterised in that** the relative spectral profile which is transmitted through the correction filter (6) corresponds to the spectrum of a halogen lamp comprising an upstream daylight filter and/or thermal protection filter, at least in the predominant part of the visible wavelength range.

7. A microscope (1) for analysing a sample, comprising
a transmitted light bright field illumination means (3) and
an incident light fluorescence illumination means (2),
wherein these two illumination means (2, 3) can be switched on alternately or simultaneously,
wherein a white light LED (4) is provided as the light source for the transmitted light bright field illumination means, and wherein a spectral correction filter (6) can be activated at a location in the illumination beam path of the transmitted light bright field illumination means (3) both when the transmitted light bright field illumination means is switched on and when the incident light fluorescence illumination means is switched on, and wherein the correction filter (6) has a spectral transmission profile which has a transmission minimum in the wavelength range of at least one maximum of the spectrum of the white light LED (4), and
wherein the spectrum of the excitation light of the incident light fluorescence illumination reaching the sample (10) has spectral components which serve to excite a conversion dye which is present in the white light LED (4), the correction filter (6) having the transmission minimum in the range of these spectral components to reduce the stimulation of the conversion dye.

8. The microscope according to claim 7, **characterised in that** the spectrum of the white light LED (4) has at least two maxima, which are in particular in the blue and green-yellow wavelength ranges, respectively, and the spectral transmission profile of the correction filter (6) has a transmission minimum in the wavelength range of at least one of these maxima, and the spectrum of the white light LED (4) has at least one minimum, which is between the at least two maxima, and the spectral transmission profile of the correction filter (6) has a transmission maximum in the wavelength range of this at least one minimum.

9. The microscope according to claim 7 or claim 8, **characterised in that** the spectral transmission profile of the correction filter (6) is tuned to the spectrum of the white light LED (4) in such a way that the relative spectral profile which is transmitted through the correction filter (6) corresponds to the spectrum of a halogen lamp, at least in the predominant part of the visible wavelength range.

10. The microscope according to claim 9, **characterised in that** the relative spectral profile which is transmitted through the correction filter (6) corresponds to the spectrum of a halogen lamp comprising an upstream thermal protection filter and/or daylight filter, at least in the predominant part of the visible wavelength range.

11. The microscope according to claim 9 or claim 10, **characterised in that** the predominant part of the visible wavelength range extends from 420 nm to 700 nm.

12. The microscope according to any one of claims 7 to 11, **characterised in that** the spectrum of the white light LED (4) has two maxima which are in the ranges from 440 nm to 470 nm and from 520 nm to 570 nm, respectively.

13. The microscope according to any one of claims 7 to 12, **characterised in that** the spectrum of the white light LED (4) has a minimum which is in a range between 470 nm and 520 nm, in particular at 500 nm.

## Revendications

1. Procédé pour éclairer un échantillon (10) dans un microscope (1), l'échantillon (10) étant analysé de manière alternée ou simultanée dans un éclairage diascopique en fond clair et dans un éclairage épiscopique à fluorescence,
dans lequel une LED à lumière blanche (4) est utilisée comme source de lumière pour l'éclairage diascopique en fond clair, et un filtre de correction (6) à un emplacement dans le trajet de faisceau d'éclairage de l'éclairage diascopique en fond clair est activé à la fois dans l'éclairage diascopique en fond clair et dans l'éclairage épiscopique à fluorescence,
dans lequel le filtre de correction (6) a un profil de transmission spectral qui est accordé sur la LED à lumière blanche et qui a un minimum de transmission dans la gamme de longueur d'onde d'au moins un maximum du spectre de la LED à lumière blanche (4),
dans lequel le spectre de la lumière d'excitation de l'éclairage épiscopique à fluorescence atteignant l'échantillon (10) a des composantes spectrales servant à exciter un colorant de conversion qui est présent dans la LED à lumière blanche (4), le filtre de correction (6) ayant le minimum de transmission dans la plage de ces composantes spectrales afin de réduire la stimulation du colorant de conversion.

2. Procédé selon la revendication 1, **caractérisé en ce que** le filtre de correction (6) est activé dans le trajet de faisceau d'éclairage de l'éclairage diascopique en fond clair même lorsque la LED à lumière blanche (4) est éteinte.

3. Procédé selon l'une ou l'autre des revendications 1 ou 2, **caractérisé en ce qu'**un filtre ayant un profil de transmission spectral qui a des minima dans les plages de longueurs d'onde des maxima du spectre de la LED à couleur blanche (4) est utilisé en tant que filtre de correction (6).

4. Procédé selon l'une quelconque des revendications 1 à 3, **caractérisé en ce qu'**un filtre ayant un profil de transmission spectral qui a des maxima de transmission dans les plages de longueurs d'onde des minima du spectre de la LED à lumière blanche (4) est utilisé en tant que filtre de correction (6).

5. Procédé selon les revendications 1 à 4, **caractérisé en ce que** le profil de transmission spectral du filtre de correction (6) est accordé sur le spectre de la LED à lumière blanche (4) de manière à ce que le profil spectral relatif qui est transmis à travers le filtre de correction (6) corresponde au spectre d'une lampe à halogène, en particulier comportant un filtre de lumière du jour et/ou un filtre de protection thermique en amont, au moins dans la partie prédominante de la gamme de longueur d'onde visibles.

6. Procédé selon la revendication 5, **caractérisé en ce que** le profil spectral relatif qui est transmis à travers le filtre de correction (6) correspond au spectre d'une lampe à halogène comportant un filtre de lumière du jour et/ou un filtre de protection thermique en amont, au moins dans la partie prédominante de la gamme de longueur d'onde visibles.

7. Microscope (1) pour analyser un échantillon, comportant :
des moyens d'éclairage diascopique en fond clair (3) et
des moyens d'éclairage épiscopique à fluorescence (2),
dans lequel ces deux moyens d'éclairage (2, 3) peuvent être allumés de manière alternée ou simultanée,
dans lequel une LED à lumière blanche (4) est prévue en tant que source de lumière pour les moyens d'éclairage diascopique en fond clair, et dans lequel un filtre de correction spectrale (6) peut être activé à un emplacement dans le trajet de faisceau d'éclairage des moyens d'éclairage diascopique en fond clair (3) à la fois lorsque les moyens d'éclairage diascopique en fond clair sont allumés et lorsque les moyens d'éclairage épiscopique à fluorescence sont allumés, et dans lequel le filtre de correction (6) a un profil de transmission spectral qui a un minimum de transmission dans la gamme de longueur d'onde d'au moins un maximum du spectre de la LED à lumière blanche (4), et
dans lequel le spectre de la lumière d'excitation de l'éclairage épiscopique à fluorescence atteignant l'échantillon (10) a des composantes spectrales qui servent à exciter un colorant de conversion qui est présent dans la LED à lumière blanche (4), le filtre de correction (6) ayant le minimum de transmission dans la plage de ces composantes spectrales afin de réduire la stimulation du colorant de conversion.

8. Microscope selon la revendication 7, **caractérisé en ce que** le spectre de la LED à lumière blanche (4) a au moins deux maxima, qui sont en particulier dans les gammes de longueur d'onde bleue et vert-jaune, respectivement, et le profil de transmission spectral du filtre de correction (6) a un minimum de transmission dans la gamme de longueur d'onde d'au moins un de ces maxima, et le spectre de la LED à lumière blanche (4) a au moins un minimum, qui est compris entre les au moins deux maxima, et le profil de transmission spectral du filtre de correction (6) a un maximum de transmission dans la gamme de longueur d'onde de ce au moins un minimum.

9. Microscope selon la revendication 7 ou la revendication 8, **caractérisé en ce que** le profil de transmission spectral du filtre de correction (6) est accordé sur le spectre de la LED à lumière blanche (4) de manière à ce que le profil spectral relatif qui est transmis à travers le filtre de correction (6) corresponde au spectre d'une lampe à halogène, au moins dans la partie prédominante de la gamme de longueur d'onde visible.

10. Microscope selon la revendication 9, **caractérisé en ce que** le profil spectral relatif qui est transmis à travers le filtre de correction (6) correspond au spectre d'une lampe à halogène comportant un filtre de protection thermique et/ou un filtre de lumière du jour en amont, au moins dans la partie prédominante de la gamme de longueur d'onde visibles.

11. Microscope selon la revendication 9 ou la revendication 10, **caractérisé en ce que** la partie prédominante de la gamme de longueur d'onde visible s'étend de 420 nm à 700 nm.

12. Microscope selon l'une quelconque des revendications 7 à 11, **caractérisé en ce que** le spectre de la LED à lumière blanche (4) a deux maxima qui sont dans les plages de 440 nm à 470 nm et de 520 nm à 570 nm, respectivement.

13. Microscope selon l'une quelconque des revendications 7 à 12, **caractérisé en ce que** le spectre de la LED à lumière blanche (4) a un minimum qui est dans une plage comprise entre 470 nm et 520 nm, en particulier à 500 nm.
